# EUROPEAN PATENT APPLICATION

(11) **EP 2 777 857 A2**
(43) Date of publication of application: **17.09.2014**
(21) Application number: 14158804.6
(22) Date of filing: 11.03.2014
(51) Int. Cl.: B23K 1/00, B23K 5/18, B23K 9/04, B23K 37/00, B23K 20/12, B23K 26/34, B23K 31/02, F01D 5/00

(54) **Joining methods and temperature controlled fluid treating systems for joining**

(30) Priority: 14.03.2013 US 201313826640
(71) Applicant: General Electric Company, Schenectady, New York 12345 (US)
(72) Inventor: Simpson, Michelle Fullerton, Greenville, SC South Carolina 29615 (US); Hunt, Mark Lawrence, Greenville, SC South Carolina 29615 (US)
(74) Representative: Picker, Madeline Margaret

(57) **Abstract**

Methods 300 for joining material to an article comprising one or more passageways include fluidly connecting 310 a temperature controlled fluid source comprising temperature controlled fluid to at least one passageway and passing 320 the temperature controlled fluid through the at least one passageway, wherein the temperature controlled fluid at least partially controls a temperature profile of the article. The methods 300 further include joining material 330 to the article, wherein the temperature profile of the article at least partially controls a resulting joined material characteristic.

## Description

The subject matter disclosed herein relates to joining methods and temperature controlled fluid treating systems and, more specifically, to joining methods and temperature controlled fluid treating systems for controlling temperature profiles of articles.

In gas turbine engines, such as aircraft engines for example, air is drawn into the front of the engine, compressed by a shaft-mounted rotary-type compressor, and mixed with fuel. The mixture is burned, and the hot exhaust gases are passed through a turbine mounted on a shaft. The flow of gas turns the turbine, which turns the shaft and drives the compressor and fan. The hot exhaust gases flow from the back of the engine, driving it and the aircraft forward.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures is a well-established art, and depends in part on supplying a cooling air to the outer surfaces of the metal parts through various methods. The metal parts of these engines that are particularly subject to high temperatures, and thus require particular attention with respect to cooling, are the metal parts forming combustors and parts located aft of the combustor, in the so-called "hot gas path". For example, the operating temperatures can be partially regulated by using passageways such as cooling holes incorporated into some engine components.

Superalloys, such as precipitation-hardenable Ni-based superalloys, or Co-based superalloys, can be used for turbine components to help withstand higher operating temperatures. However, the repair of these materials and components may also require significant resources such as to properly preheat and/or cool weld repair sites. Moreover, the large size of these components can also prevent some preheating devices (e.g., induction heaters) from effectively preheating the necessary area. As a result, the preheating, cooling and any other temperature cycling can thus require additional resources and time to allow for sufficient joining of additional material for modifications or repairs.

Accordingly, alternative joining methods and temperature controlled fluid treating systems would be welcomed in the art.

In one embodiment a method is disclosed of joining material to an article comprising one or more passageways. The method includes fluidly connecting a temperature controlled fluid source comprising temperature controlled fluid to at least one passageway and passing the temperature controlled fluid through the at least one passageway, wherein the temperature controlled fluid at least partially controls a temperature profile of the article. The method further includes joining material to the article, wherein the temperature profile of the article at least partially controls a resulting joined material characteristic.

In another embodiment, a temperature controlled fluid treating system is disclosed for joining material to an article comprising one or more passageways. The temperature controlled fluid treating system includes a temperature controlled fluid source that fluidly connects to at least one passageway of the article and passes a temperature controlled fluid through the passageway, wherein the temperature controlled fluid at least partially controls a temperature profile of the article. The temperature controlled fluid treating system further includes a material joining apparatus that joins material to the article, wherein the temperature profile of the article at least partially controls a joined material characteristic.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a schematic illustrated of a temperature controlled fluid treatment system according to one or more embodiments shown or described herein;
FIG. 2 is a perspective view of a temperature controlled fluid treatment system according to one or more embodiments shown or described herein;
FIG. 3 is a perspective view of another temperature controlled fluid treatment system according to one or more embodiments shown or described herein; and,
FIG. 4 is a method of joining material to an article using a temperature controlled fluid treating system according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Temperature controlled fluid treating systems disclosed herein generally comprise a temperature controlled fluid source and a material joining apparatus to join material to the target location of an article comprising passageways. In addition to the material joining apparatus joining material to the target location, temperature controlled fluid is fluidly connected to the passageways and passed there through to at least partially control the temperature profile of the article, which in turn at least partially controls a characteristic (e.g., microstructure) of the joined material. As used herein, "joined material" may refer to the article itself or to material added to the article, such as, for example, welding material. Temperature controlled fluid treating systems and methods of joining material to an article will be discussed in more detail herein.

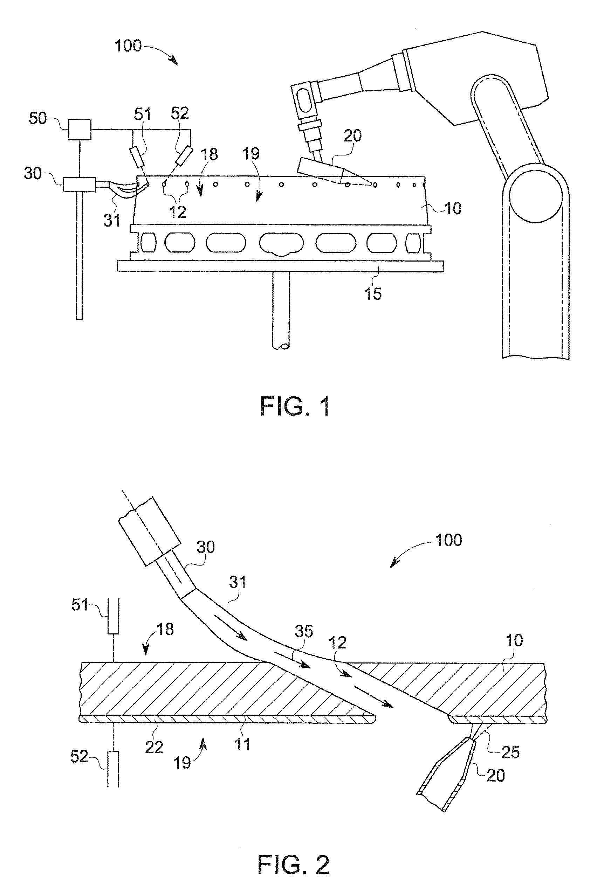

Referring now to FIGS. 1-3, a temperature controlled fluid treating system 100 is illustrated comprising a material joining apparatus 20 and a temperature controlled fluid source 30 for joining material to an article 10. As discussed above, the article 10 can comprise a variety of different types of articles such as components for a turbine. For example, in some embodiments, the article 10 can comprise a transition piece, liner, bucket, blade, vane, nozzle, or shroud. In some embodiments, the article 10 can comprise a turbine component such as a hot gas path component or a combustion component. In other embodiments, the article 10 can comprise any other component of a turbine such as a component for a gas turbine, industrial gas turbine, steam turbine or the like.

The article 10 can have a temperature profile that comprises the specific temperature at each respective location on and about the article 10. As will become appreciated herein, the temperature profile can vary with respect to location and can depend on a variety of factors such as external temperatures, the temperature of the joined material and the like. Specifically, the temperature profile can also depend at least in part on the temperature of the temperature controlled fluid that passes through the passageways 12.

The article 10 comprises one or more passageways 12 passing at least partially through the article 10. For example, in some embodiments, the one or more passageways 12 pass from a first end 18 to a second end 19. However, in other embodiments (not illustrated), the one or more passageways 12 may pass from a first end 18, serpentine through a portion of the article 10 and then exit back through the first end 18 without breaching the second end 19. The passageways 12 can thus comprise any passage that at least partially passes through the article 10 and can allow for temperature controlled fluid 35 that passes there through to at least partially control the temperature profile of the article 10 as will become appreciated herein. In some embodiments, such as when the article 10 comprises a turbine component, at least one of the one or more passageways 12 can comprise a cooling hole. As used herein, "cooling hole" refers to a passageway 12 that passes from a first end 18 to a second end 19 of the article 10 and that is used to help cool the article 10 during operation.

As best illustrated in FIGS. 2-3, the second end 19 of the article 10 comprises a target location 11 that is to have joined material 22 joined thereto. The target location 11 may have joined material 22 joined prior to first use, during routine or unscheduled repair maintenance, or as otherwise necessary depending on the life of the article 10. For example, joining material can repair damaged sites, connect multiple articles together or otherwise build up additional material not already present. In some embodiments, joining material may add material that is the same as or similar to the substrate to allow for more closely matched properties between the joined material 22 and the article 10. In some embodiments, the material may be dissimilar. Dissimilar materials may be used, for example, to provide enhanced characteristics that address the defect mode and surface requirements of a particular area of an article. For example, the dissimilar material may provide better oxidation resistance, creep, low cycle fatigue, wear properties, or a combination of these.

In some embodiments, the article 10 may be disposed on a support stand 15 prior to or during the joining of material as will become appreciated herein. The support stand 15 may be stationary or mobile (e.g., rotatable) and position the article 10 relative to the material joining apparatus 20 and the temperature controlled fluid source 30 when joining material to the target location 11 of the article 10.

Still referring to FIGS. 1-3, the temperature controlled fluid treating system 100 further comprises the material joining apparatus 20. The material joining apparatus 20 comprises any device that joins material to a target location 11 of the article 10 with a joined material 22. For example, in some embodiments, the material joining apparatus 20 can comprise a welder such as an induction welder, an arc welder (e.g., a TIG welder), a gas welder (e.g., an oxyacetylene torch), an energy beam welder (e.g., a laser beam welder) and/or any other type of welder that can melt and deposit weld material 25 (as illustrated) onto the target location 11 of the article 10. In other embodiments, the material joining apparatus may enable other joining methods such as brazing, solid state joining methods (e.g., diffusion bonding, friction welding, resistance welding) or the like.

The material joining apparatus 20 may be disposed at any position relative to the article 10 that allows for joining material to the target location 11. For example, as illustrated in FIG. 1, in some embodiments the article 10 may be disposed on a support stand 15 adjacent the material joining apparatus 20. The support stand 15 may then be able to rotate or otherwise displace the article 10 with respect to the material joining apparatus 20 and/or the material joining apparatus 20 may be able to articulate with respect to the article 10. The material joining apparatus 20 may then be used to apply joined material (e.g. the weld material 25 as illustrated) onto the target location 11 of the article 10.

Referring still to FIGS. 1-3, the temperature controlled fluid treating system 100 further comprises a temperature controlled fluid source 30. The temperature controlled fluid source 30 comprises a fluid connection 31 that fluidly connects a source of temperature controlled fluid 35 to at least one passageway 12 of the article 10. As used herein, "fluid connection" refers to a connection that allows the temperature controlled fluid 35 to pass from the temperature controlled fluid source 30 to the passageway 12 with negligent loss to the outside environment. The fluid connection can comprise, for example, flexible tubes, hoses, pipes or any other conduit that directs the passage of the temperature controlled fluid 35 to the one or more passageways 12.

In one embodiment, such as that illustrated in FIG. 2, the fluid connection 31 may comprise a tube that directly connects the output of the temperature controlled fluid source 30 to the first end 18 of the passageway 12. In some embodiments, the fluid connection 31 may comprise a single tube between the temperature controlled fluid source 30 and a single passageway 12 (such as that illustrated in FIG. 2). In other embodiments, the fluid connection may comprise a single tube leaving the temperature controlled fluid source 30 that breaks off into segments that connect to a plurality of passageways 12 (such as that illustrated in FIG. 1). In even other embodiments, the fluid connection 31 may comprise a plurality of tubes leaving the temperature controlled fluid source 30 that connects to a single or a plurality of passageways 12. For example, the fluid connection 31 may comprise a plurality of channels of similar or dissimilar temperature controlled fluids 35 that connect to two or more passageways. Moreover, the plurality of channels may comprise different pressures, temperatures, directions or mixtures of temperature controlled fluids 35. It should be appreciated that any other configuration that provides a fluid connection 31 between the temperature controlled fluid source 30 and one or more passageways 12 may alternatively or additionally be realized.

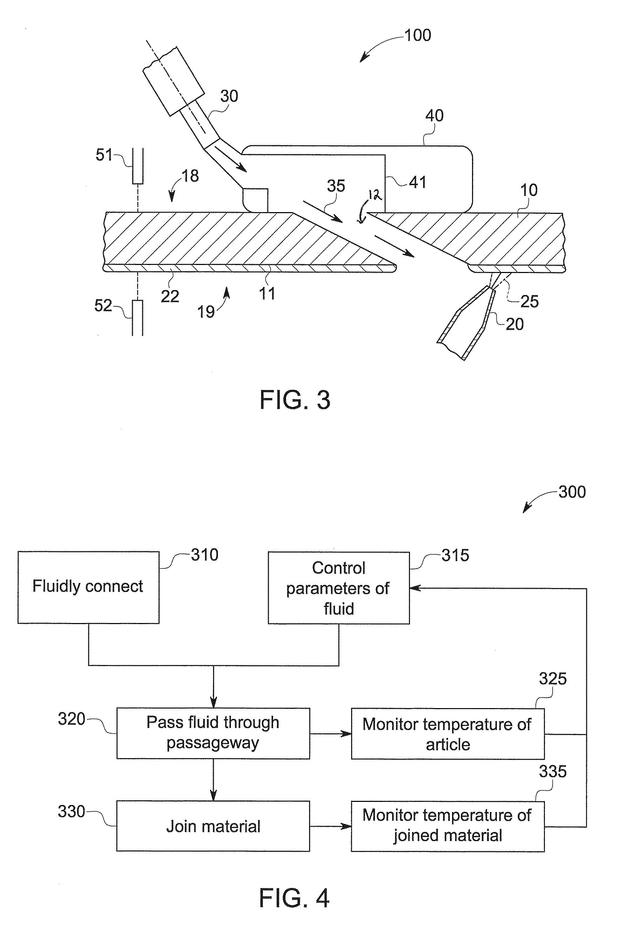

For example, referring now to FIG. 3, in some embodiments the fluid connection 31 may comprise a multi-outlet manifold connection 40 comprising an internal passage 41 that can receive temperature controlled fluid 35 from the temperature controlled fluid source 30 and fluidly distribute it to one or more passageways. The multi-outlet manifold connection 40 can thereby attach directly to the first end 18 of the article 10 and distribute the temperature controlled fluid 35 to a wide area about the article 10. Any passageways 12 within that area will thereby have temperature controlled fluid 35 fluidly pass there through.

The temperature controlled fluid 35 can comprise any medium that can pass through the passageway 12 at a controlled temperature and/or a controlled pressure. The temperature controlled fluid 35 may be heated or cooled through any suitable means prior to passing through the at least one passageway 12. For example, in some embodiments, the temperature controlled fluid 35 may be heated by passing through or near an induction coil, flame, or other heating source. Alternatively, the temperature controlled fluid 35 may be cooled by passing through or near a chiller, liquid nitrogen or other suitable cooling source. In some embodiments, the temperature controlled fluid 35 may comprise a plurality of fluids, at least one of which is temperature controlled. For example, a heated (or cooled) fluid may be mixed with a room temperature fluid at a rate that achieves a final target temperature. In some embodiments, the temperature controlled fluid 35 may comprise one or more gasses such as an inert gas, e.g. Argon. While specific embodiments of temperature controlled fluid 35 have been presented herein, it should be appreciated that additional and alternative temperature controlled fluids 35 may also be realized. In some embodiments, the type of temperature controlled fluid 35 may be selected in part on its thermal transfer characteristics with the article 10.

Still referring to FIGS. 1-3, the temperature controlled fluid treating system 100 may further comprise a controller 50. The controller 50 can comprise any electrical or mechanical device that can control at least one temperature controlled fluid parameter. Temperature controlled fluid parameters refer to any parameter that affects the change in temperature profile of the article 10 based on the temperature controlled fluid that passes there through.

For example, one temperature controlled fluid parameter is the temperature of the temperature controlled fluid 35. By increasing or decreasing the temperature of the temperature controlled fluid 35, the temperature profile of article 10 can also increase or decrease respectively. In such embodiments, the controller 50 may increase or decrease the temperature by communicating with heating and/or cooling sources or by adjusting the resident time of the temperature controlled fluid 35 as it passes through those heating and/or cooling sources. Another temperature controlled fluid parameter is the pressure of the temperature controlled fluid 35. For example, by increasing the pressure, the temperature controlled fluid 35 may pass through the passageway 12 at a faster rate thereby changing its effect on the temperature profile of the article 10. In such embodiments, the controller 50 may increase or decrease the pressure and/or flow rate by communicating with a compressor, flow rate valves, or other device that controls the flow of the temperature controlled fluid 35. While specific temperature controlled fluid parameters (and methods of changing the same) have been presented herein, it should be appreciated that these are exemplary only and any other suitable parameter may additionally or alternatively be incorporated.

In some embodiments, the temperature controlled fluid treating system 100 may comprise one or more temperatures sensors 51. For example, as illustrated in FIGS. 1-3, the temperature controlled fluid treating system 100 may comprise an article temperature sensor 51 and/or a joined material temperature sensor 52. The article temperature sensor 51 can measure at least part of the temperature profile of the article 10. In some embodiments, the controller 50 may adjust at least one temperature controlled fluid parameter based at least in part on one or more measurements from the article temperature sensor 51. Likewise, the joined material temperature sensor 52 can measure at least part of a second temperature profile of the joined material 22. In some embodiments, the controller 50 may adjust at least one temperature controlled fluid parameter based at least in part on one or more measurements from the joined material temperature sensor 52.

The article temperature sensor 51 and the joined material temperature sensor 52 can comprise any suitable device for measuring the temperature at one or more locations about the article 10 and the joined material 22 respectively. For example, the article temperature sensor 51 and/or the joined material temperature sensor 52 can comprise a thermocouple, infrared thermometer, or the like.

In operation, the temperature controlled fluid source 30 thereby passes the temperature controlled fluid 35 through the at least one passageway 12. The temperature controlled fluid 35 thereby at least partially controls the temperature profile of the article 10 by heating or cooling one or more locations. Likewise, the material joining apparatus 20 joins the joined material 22 to the target location 11. It should be appreciated that these events can occur simultaneously or in any sequence.

The joined material 22 will subsequently cool or otherwise stabilize to form its final microstructure. However, during said cooling or other stabilization, the microstructure of the joined material 22 will be at least partially controlled by the temperature profile of the article 10. Accordingly, the temperature controlled fluid 35 can assist in the production of a quality joined material 22 by controlling the temperature profile of the article 10 throughout the joining process thereby controlling a joined material characteristic. As used herein, "joined material characteristic" refers to any mechanical and/or chemical property of the resulting joined material (e.g., the article, weld, braze, etc.) such as microstructure, finish, quality or the like. For example, by controlling the joined material microstructure, the joined material's ductility, toughness or the like can be controlled so that the resulting joined material has properties tailored for the particular material and/or application.

Furthermore, the article 10 may be maintained at an elevated temperature to avoid larger temperature differences with the joined material 22, may be maintained at a lower temperature to promote faster cooling of the new joined material 22, or may be cycled between different temperatures depending on the demands of a particular joining application include for the perseveration of the article's microstructure.

For example, if the joining process brings about an excess amount of heat, the temperature controlled fluid 35 may be cooled while it is passed through one or more passageways 12 to subsequently cool the article 10. This may prevent overheating and reduce or eliminate the need to cycle the joining application. Conversely, if the joining application requires an elevated temperature that is not inherently provided by the material joining apparatus 20, the temperature controlled fluid 35 may be heated while it is passed through one or more passageways 12 to subsequently heat the article 10 before and/or during joining. In even some embodiments when the material joining apparatus 20 comprises a welder, the temperature controlled fluid 35 may additionally shield one or more portions of the article 10 from the welder to prevent or limit the change in the article's properties as a result of the utilization of the welder. For example, the temperature controlled fluid 35 may comprise an inert gas such as Argon so that it would prevent oxidation of the molten surfaces during the joining operation.

Referring now to FIGS. 1-4, a method 300 is illustrated for joining material to a target location 11 of an article 10 comprising one or more passageways 12. The method 300 first comprises fluidly connecting the temperature controlled fluid source 30 comprising the temperature controlled fluid 35 to at least one passageway 12 in step 310. Simultaneously, sequentially or in combinations thereof, the method 300 can further comprise controlling one or more parameters of the temperature controlled fluid 35 (such as by using a controller 50 in communication with a heating source, cooling source, pressure source or the like) in step 315.

The method 300 further comprises passing the temperature controlled fluid 35 through the at least one passageway 12 in step 320. As a result of its relatively elevated or reduced temperature, the temperature controlled fluid 35 will at least partially control the temperature profile of the article 10. While, before or after the temperature controlled fluid 35 is passed through the at least one passageway 12 in step 320, the target location 11 of the article 10 has material joined thereto in step 330. Furthermore, the temperature profile of the article 10 (which is at least partially controlled by the temperature controlled fluid 35 passing through the at least one passageway 12 in step 320) at least partially controls the microstructure of the joined material 22 (e.g., the microstructure of the article 10, weld material 25, etc.).

In some embodiments, the method 300 may further comprise monitoring the temperature profile of the article 10 in step 325 and/or monitoring the temperature profile of the joined material in step 335. The monitoring of said temperature profiles in steps 325 and/or 335 may then be utilized when controlling at least one temperature controlled fluid parameter in step 315. The method 300 may then continue until the joined material 22 is completely applied to the article 10 such that the temperature profile of the article 10 no longer needs to be at least partially controlled by the temperature controlled fluid 35 passing through the at least one passageway 12. By joining material in step 330 before, during or after (or combinations thereof) passing through temperature controlled fluid 35 in step 320, the temperature controlled fluid 35 can be used to preheat the article 10 before joining material in step 330, maintain the temperature of the article 10 in a certain range while joining material in step 330, and/or cool down the article 10 after joining material in step 330.

It should now be appreciated that temperature controlled fluid treating systems may be used to at least partially control the temperature profile of an article while material is joined thereto. This can thereby increase the process control of joining material and subsequent joined material yield rates. Moreover, dynamically controlling the temperature profile of the article through temperature controlled fluid can reduce process time by eliminating necessary cooling/rest periods and maintain or improve the overall quality of the final article.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of joining material to an article comprising one or more passageways, the method comprising:
   fluidly connecting a temperature controlled fluid to at least one passageway;
   passing the temperature controlled fluid through the at least one passageway, wherein the temperature controlled fluid at least partially controls a temperature profile of the article; and
   joining material to the article, wherein the temperature profile of the article at least partially controls a resulting joined material characteristic.
2. The method of clause 1, wherein the joined material characteristic is the microstructure of the article.
3. The method of any preceding clause, wherein joining material comprises welding material.
4. The method of any preceding clause further comprising adjusting at least one temperature controlled fluid parameter.
5. The method of any preceding clause, wherein adjusting at least one temperature controlled fluid parameter comprises adjusting a temperature of the temperature controlled fluid.
6. The method of any preceding clause, wherein adjusting at least one temperature controlled fluid parameter comprises adjusting a pressure of the temperature controlled fluid.
7. The method of any preceding clause further comprising monitoring the temperature profile of the article, wherein the at least one temperature controlled fluid parameter is adjusted based at least in part on the temperature profile of the article.
8. The method of any preceding clause further comprising monitoring a second temperature profile of a resulting joined material, wherein the at least one temperature controlled fluid parameter is adjusted based at least in part on the second temperature profile of the resulting joined material.
9. The method of any preceding clause, wherein the article comprises a turbine component.
10. The method of any preceding clause, wherein the at least one of the one or more passageways comprises a cooling hole for the turbine component.
11. The method of any preceding clause, wherein the turbine component comprises a Ni-based superalloy.
12. The method of any preceding clause, wherein the temperature controlled fluid is connected to a first end of the passageway and a joining location is on a second end of the passageway, and wherein passing the temperature controlled fluid through the at least one passageway comprises passing the temperature controlled fluid from the first end to the second end.
13. A temperature controlled fluid treating system for joining material to an article comprising one or more passageways, the temperature controlled fluid treating system comprising:
   a temperature controlled fluid source that fluidly connects to at least one passageway of the article and passes a temperature controlled fluid through the passageway, wherein the temperature controlled fluid at least partially controls a temperature profile of the article; and,
   a material joining apparatus that joins material to the article, wherein the temperature profile of the article at least partially controls a joined material characteristic.
14. The temperature controlled fluid treating system of claim 13 wherein the material joining apparatus is a welder.
15. The temperature controlled fluid treating system of any preceding clause further comprising a controller that adjusts at least one temperature controlled fluid parameter while the material joining apparatus joins material to the article.
16. The temperature controlled fluid treating system of any preceding clause, wherein the at least one temperature controlled fluid parameter comprises a temperature of the temperature controlled fluid.
17. The temperature controlled fluid treating system of any preceding clause, wherein the at least one temperature controlled fluid parameter comprises a pressure of the temperature controlled fluid.
18. The temperature controlled fluid treating system of any preceding clause further comprising an article temperature sensor that measures at least part of the temperature profile of the article, wherein the controller adjusts at least one temperature controlled fluid parameter based at least in part on one or more measurements of the article temperature sensor.
19. The temperature controlled fluid treating system of any preceding clause further comprising a joined material temperature sensor that measures at least part of a second temperature profile of a resulting joined material, wherein the controller adjusts at least one temperature controlled fluid parameter based at least in part on one or more measurements of the joined material temperature sensor.
20. The temperature controlled fluid treating system of any preceding clause, wherein the article comprises a turbine component, and wherein at least one of the one or more passageways comprises a cooling hole for the turbine component.

## Claims

1. A method (300) of joining material to an article comprising one or more passageways, the method comprising:
fluidly connecting (310) a temperature controlled fluid to at least one passageway;
passing (320) the temperature controlled fluid through the at least one passageway, wherein the temperature controlled fluid at least partially controls a temperature profile of the article; and
joining (330) material to the article, wherein the temperature profile of the article at least partially controls a resulting joined material characteristic.

2. The method of claim 1, wherein the joined material characteristic is the microstructure of the article.

3. The method of claim 1 or claim 2, wherein joining material comprises welding material.

4. The method of claim 1, 2 or 3 further comprising adjusting at least one temperature controlled fluid parameter.

5. The method of claim 4, wherein adjusting at least one temperature controlled fluid parameter comprises at least one of:
adjusting a temperature of the temperature controlled fluid, and
adjusting a pressure of the temperature controlled fluid.

6. The method of claim 4 or claim 5, further comprising monitoring (325) the temperature profile of the article, wherein the at least one temperature controlled fluid parameter is adjusted based at least in part on the temperature profile of the article.

7. The method of claim 6, further comprising monitoring (335) a second temperature profile of a resulting joined material, wherein the at least one temperature controlled fluid parameter is adjusted based at least in part on the second temperature profile of the resulting joined material.

8. The method of any preceding claim, wherein the article comprises a turbine component, wherein the at least one of the one or more passageways comprises a cooling hole for the turbine component, and/or the turbine component comprises a Ni-based superalloy.

9. The method of any preceding claim, wherein the temperature controlled fluid is connected to a first end of the passageway and a joining location is on a second end of the passageway, and wherein passing the temperature controlled fluid through the at least one passageway comprises passing the temperature controlled fluid from the first end to the second end.

10. A temperature controlled fluid treating system (100) for joining material to an article (10) comprising one or more passageways (12), the temperature controlled fluid treating system comprising:
a temperature controlled fluid source (30) that fluidly connects to at least one passageway (12) of the article (10) and passes a temperature controlled fluid through the passageway (12), wherein the temperature controlled fluid at least partially controls a temperature profile of the article (10); and,
a material joining apparatus (20) that joins material to the article (10), wherein the temperature profile of the article (10) at least partially controls a joined material characteristic.

11. The temperature controlled fluid treating system of claim 10, wherein the material joining apparatus (20) is a welder.

12. The temperature controlled fluid treating system of claim 10 or claim 11, further comprising a controller (50) that adjusts at least one temperature controlled fluid parameter while the material joining apparatus (20) joins material to the article (10).

13. The temperature controlled fluid treating system of claim 12, wherein the at least one temperature controlled fluid parameter comprises:
a temperature of the temperature controlled fluid, and/or
a pressure of the temperature controlled fluid.

14. The temperature controlled fluid treating system of any one of claims 10 to 13, further comprising:
an article temperature sensor (51) that measures at least part of the temperature profile of the article (10), wherein the controller (50) adjusts at least one temperature controlled fluid parameter based at least in part on one or more measurements of the article temperature sensor (51), and/or
a joined material temperature sensor (52) that measures at least part of a second temperature profile of a resulting joined material (22), wherein the controller (50) adjusts at least one temperature controlled fluid parameter based at least in part on one or more measurements of the joined material temperature sensor (52).

15. The temperature controlled fluid treating system of any one of claims 10 to 14, wherein the article (10) comprises a turbine component, and wherein at least one of the one or more passageways (12) comprises a cooling hole for the turbine component.
